(19) Europäisches Patentamt / European Patent Office / Office européen des brevets

(11) **EP 2 770 476 A2**

## (12) EUROPEAN PATENT APPLICATION

(43) Date of publication:
**27.08.2014 Bulletin 2014/35**

(51) Int Cl.:
**G06T 1/00** $^{(2006.01)}$

(21) Application number: **14151871.2**

(22) Date of filing: **21.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.02.2013 JP 2013034123**

(71) Applicant: **Hitachi Solutions, Ltd.**
**Tokyo 140-0002 (JP)**

(72) Inventors:
- **Yamada, Takaaki**
  **Tokyo, 100-8280 (JP)**
- **Kamitani, Motoki**
  **Tokyo, 140-0002 (JP)**
- **Mano, Masahiko**
  **Tokyo, 140-0002 (JP)**

(74) Representative: **MERH-IP**
**Matias Erny Reichl Hoffmann**
**Paul-Heyse-Strasse 29**
**80336 München (DE)**

(54) **Digital watermark embedding method and digital watermark detection method**

(57)   A digital watermark embedding system generates a watermarked image by providing one or more specific regions in an image, each specific region including two or more base regions symmetric with respect to the centroid, and by embedding a watermark in the image while avoiding the specific region. Further, a digital watermark detecting system detects a watermark in a region other than the specific region, by detecting the shape of the specific region in which no watermark is embedded, calculating the centroid position of the specific region as a centroid, and correcting geometric transformation of the image based on the location in the image that corresponds to one or more calculated centroids.

F I G. 1

EP 2 770 476 A2

## Description

FIELD OF THE INVENTION

The present invention relates to a digital watermark embedding and a digital watermark detection method.

BACKGROUND OF THE INVENTION

A print in which a watermarked image is printed may be captured by a camera to detect a watermark in the camera image. At this time, the print is geometrically transformed and captured due to camera operation of the user. The image input in a digital watermark detection process is not necessarily a watermarked image. For this reason, the input image is referred to as the target image. The target image can be the image, in which geometric transformation such as rotation and scaling is applied to the watermarked image. For this reason, the watermark detection requires a process for correctly detecting a watermark in the geometrically transformed image.

Japanese Patent No. 3902863 discloses a technique for treating the distance between locations of watermarked region of image as information. In other words, the technique involves embedding information in the correlation between pixels and detecting the information.

Japanese Patent No. 3949679 discloses a technique for providing a watermark in rotation symmetry to ensure watermark robustness against rotation without searching a watermark in the rotated image. In this case, a calibration-purpose watermark is embedded in addition to the embedding information.

SUMMARY OF THE INVENTION

Conventional techniques have three problems of: (A) maintaining the image quality of watermarked image; (B) ensuring the watermark robustness against image processing; and (C) speeding up processing in watermark detection, which have been difficult to be solved in a balanced manner. These problems are in a trade-off relationship, so that when one of the problems is solved, the performance for the other problems is likely to be reduced.

For example, it is difficult for the technique described in Japanese Patent No. 3902863 to solve (B) and (C), although the technique can solve (A). Further, it is difficult for the technique described in Japanese Patent No. 3949679 to solve (A) due to the degradation of the image quality caused by watermark embedding for the watermark robustness against rotation, although the technique can solve (B) and (C).

An object of the present invention is to provide a digital watermark embedding method and a digital watermark detection method to raise overall level of the performance with respect to the three problems. Another object of the present invention is to provide a digital watermark embedding method and a digital watermark detection method that can be applied to an image with a small size.

In order to solve the above problems, the present invention includes the following configurations.

There is provided a digital watermark embedding method in a computer including a disk, a memory, and an input/output device to generate a watermarked image. The digital watermark embedding method includes: inputting an image; and providing one or more specific regions in the image, each specific region including two or more base regions that are point symmetric with respect to the centroid, and embedding a watermark in the image while avoiding the specific region.

Further, in a computer including a disk, a memory, and an input/output device, a digital watermark detection method includes: inputting an image; detecting the shape of the specific region in which no watermark is embedded; calculating the centroid position of the specific region as a centroid; correcting geometric transformation of the image based on the location in the image that corresponds to one or more calculated centroids; and detecting a watermark in a region other than the specific region.

According to the present invention, it is possible to solve the three problems of: (A) maintaining the image quality of a watermarked image; (B) ensuring the watermark robustness against rotation; and (C) speeding up processing in watermark detection, in a balanced manner.

BRIEF DESCRIPTION OF THE DRAWINGS

Fig. 1 is a diagram of a computer system including a watermark embedding and detection method implemented in a program:
Fig. 2 is a flow chart of the process for embedding a watermark while avoiding a specific region by using a mask;
Fig. 3 is a flow chart of the process for generating a mask for specific region to provide the specific region in point symmetry;
Fig. 4 is a view of the relationship between the shape of the specific region in which no watermark is embedded, and a process for embedding a watermark;
Fig. 5 is a flow chart of a watermark detection process for correcting geometric transformation based on the detection result of the specific region;
Fig. 6 is a flow chart of the process for estimating specific regions; and
Figs. 7A, 7B, and 7C are views of the relationship between the shape of the specific region, and the process for estimating specific regions; Fig. 7A shows the case of scanning the target image without geometric transformation through the centroid, Fig. 7B shows the case of scanning the target image with geometric transformation through the centroid, and Fig. 7C shows the case of scanning the target image with geometric transformation, not through the centroid.

DETAILED DESCRIPTION OF THE PREFERRED EMBODIMENT

An embodiment of the present invention is outlined below.

In a computer including a CPU, a disk, a memory, an input device, and an output device, a digital watermark embedding system includes a module for embedding a watermark, a module for generating a mask for a specific region, a module for overall control, and a module for using an image. The process of each module is performed by a process method implemented in a program on the memory. The digital watermark embedding system performs each process under the control of the CPU.

The digital watermark embedding system inputs an original image and embedding information by using the input device, and outputs a watermarked image. In the process for embedding a watermark, the system generates a watermark encoded indicating the embedding information overlaid on the original image. In the process for generating a mask for a specific region, the system provides a specific region in point symmetry with respect to the centroid, and provides the region for embedding a watermark while avoiding the specific region. Then, the system embeds a watermark in the region for embedding a watermark. No watermark is embedded in the specific region.

A service system is an application system according to the present embodiment. The service system provides services such as printing and content delivery. The service system inputs a watermarked image, converts the watermarked image into a format for a particular service, and outputs the converted image. The converted watermarked image is output to a viewing display or viewing media. Thus, the user can view the output image.

In a computer or smartphone including a CPU, a disk, a memory, an input device, and an output device, a digital watermark detection system includes a module for overall control, a module for detecting a watermark, and a module for estimating specific regions. The process of each module is performed by a process method implemented in a program on the memory. The digital watermark detection system performs each process under the control of the CPU.

The digital watermark detection system reads an image on the memory by using an input device such as a camera. The input image is not necessarily a watermarked image, so that the read image is referred to as the target image. The digital watermark detection system performs the watermark detection process on the target image.

In the process for estimating specific regions, the system uses an estimation value for checking whether a small region in the target image is a specific region in which no watermark is embedded, to calculate the centroid position of the estimated value. Then, the system detects the location where the estimated value is symmetric with respect to the centroid position, as the centroid of the specific region.

In the digital watermark detection process, the system estimates geometric transformation generated in a plurality of centroids detected as described above. Further, the system corrects the geometric transformation by applying the corresponding inverse geometric transformation to the target image. The system detects embedding information in the region for embedding a watermark of the target image whose geometric transformation is corrected. If the detection is successful, the embedding information is decoded and output as the detection result by using the output device.

The effect obtained by the above embodiment according to one aspect of the present invention is as follows.

According to the above embodiment, it is possible to provide a digital watermark embedding and a digital watermark detection method capable of speeding up a watermark detection process and ensuring watermark robustness against image processing such as rotation and scaling, while maintaining the image quality of a watermarked image. Further, in an application system, the image quality of image in media, which is made by printing a watermarked image, can be maintained. Further, when the watermark is detected in a camera image in a smartphone or a video camera, the application system helps save memory for terminal implementation, speed up processing, and improve usability.

Human eyes tend to recognize a block of figures as a whole. The conventional watermark for geometric transformation has a regular shape. The regularity of the watermark shape is noticeable to human eyes, often leading to the deterioration of image quality of a watermarked image. In the above embodiment, the watermark for geometric transformation is not used. Thus, the process for embedding the watermark for geometric transformation is not applied to the original image. As a result, the image quality can be maintained more effectively than in the conventional method. Further, with respect to the regularity in the region in which no watermark is embedded, it is possible to draw patterns matching the patterns of the original image by using various figures including random shapes, so that the regularity is almost imperceptive to human eyes. In other words, the image quality can be maintained more effectively than in the conventional method.

The image has a rectangular shape. When a circle is drawn in the image, the diameter may not exceed the image size, preventing the effective use of the image area. In the above embodiment, it is possible to effectively use the image area by using a variety of symmetric figures including random shapes. Thus, the embedding and detection process can be performed on an image with a small size effectively at a high speed. Further, the image quality can be maintained by drawing patterns matching the patterns of the original image. In the present embodiment, the watermark for geometric transformation is not embedded in the original image, so that the original image is not deteriorated. Thus, it is possible to (a) maintain the image quality of the watermarked image, (b) ensure the watermark robustness against image processing, and (c) increase the speed of the watermark detection process.

The technique disclosed in the present specification can be applied to software, devices, services, systems, contents, and media for watermark processing and their applications.

Hereinafter, a preferred embodiment of the present invention will be described in detail with reference to the accompanying drawings. Note that like reference numerals designate like parts throughout the drawings for describing the embodiment, and the description thereof will be omitted.

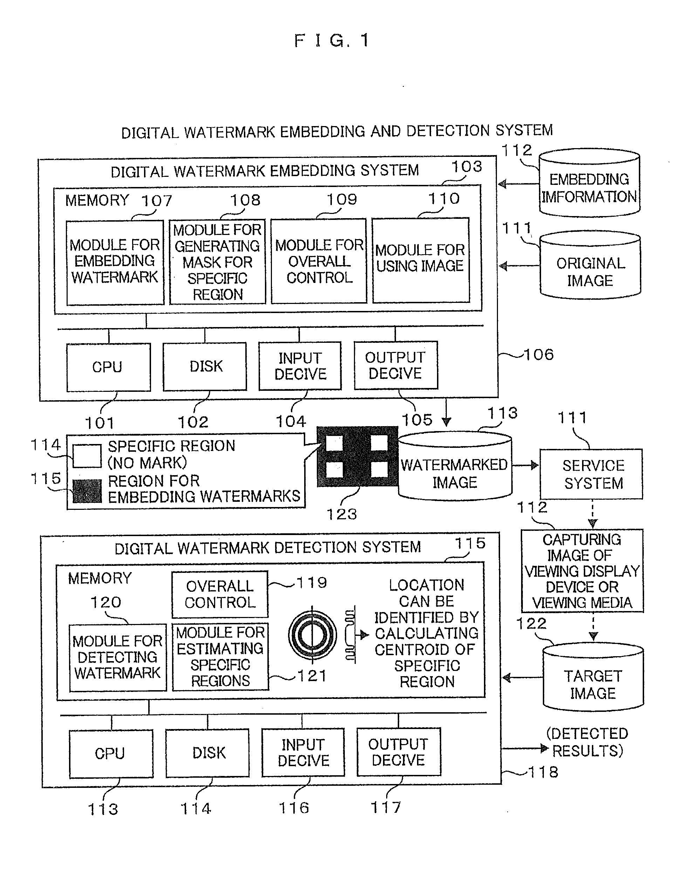

Fig. 1 is a diagram of a computer system in which a digital watermark embedding and a digital watermark detection method is implemented in a program.

In a computer including a CPU 101, a disk 102, a memory 103, an input device 104, and an output device 105, a digital watermark embedding system 106 includes modules 107, 108, 109 and 110 for performing a process for embedding a watermark, a process for generating a mask for a specific region, a process for overall control, and a process for using an image, by a process method implemented in a program on the memory 103. The digital watermark embedding system 106 performs each process under the control of the CPU 101.

The digital watermark embedding system 106 inputs an original image 111 and embedding information 112 by using the input device 104. Then, the system outputs a watermarked image. In the process 108 for generating a mask for a specific region, the system generates a mask 123, provides a specific region 114 in a symmetric shape with respect to the centroid, and provides a region 115 for embedding a watermark while avoiding the specific region. In the process 107 for embedding a watermark, the system generates a watermark encoded indicating the embedding information 112 overlaid on the original image 111. Then, the system embeds the watermark in a region 115 for embedding a watermark. No watermark is embedded in the specific region.

A service system 111 is the application system of the present embodiment to provide services such as printing and content delivery. The service system 111 inputs a watermarked image 113, converts the watermarked image into a format for a particular service, and outputs the converted image. The converted watermarked image is output to a viewing display 112 or viewing media. Thus, the user can view the output image.

In a computer or smartphone including a CPU 113, a disk 114, a memory 115, an input device 116, and an output device 117, a digital watermark detection system 118 includes modules 119, 120 and 121 for performing a process for overall control, a process for detecting a watermark, and a process for estimating specific regions, by a process method implemented in a program on the memory 115. The digital watermark detection system 118 performs each process under the control of the CPU 113. Each program may be loaded into the memory device from the other device, through a connecting interface and through media that can be used by the computer. The media includes, for example, storage media removable from the connecting interface, or communication media (namely, a network such as a wired, wireless, or optical network, or a carrier or digital signal that propagates through the network).

The digital watermark detection system 118 reads the image into the memory 115 by using the input device 116 such as a camera. The input image is not necessarily the watermarked image 113, so that the read image is referred to as the target image 121. The digital watermark detection system 118 performs the watermark detection process 120 on the target image 121 by the module for detecting a watermark.

In the process of the module 121 for estimating specific region, the digital watermark detection system 118 uses an estimation value for checking whether a small region in the target image 121 is the specific region 114, to calculate the centroid position of the estimation value. Then, the digital watermark detection system 118 detects the location where the estimation value is symmetric with respect to the centroid position, as the centroid of the specific region.

In the process of the module 120 for detecting a watermark, the digital watermark detection system 118 estimates geometric transformation generated in a plurality of centroids detected as described above. Further, the digital watermark detection system 118 applies the corresponding inverse geometric transformation to the target image 122 to correct the geometric transformation. Then, the digital watermark detection system 118 detects the embedding information in the region for embedding a watermark of the target image after the geometric transformation is corrected. If the detection is successful, the digital watermark detection system 118 decodes the embedding information and outputs the decoded information by using the output device 117 as the detection result.

Note that in the process of the module 107 for embedding a watermark, the digital watermark detection system 118 can input predetermined parameters and common parameters from the user or the output of another system by using the input device 104 in the process of the module 109 for overall control. Alternately, these parameters can be stored in the disk 102 or the memory 103 in advance. The process of the module 107 for embedding a watermark can be combined with the process of the module 110 for using an image that can edit and process the image. This is the same for the process of the module 120 for detecting a watermark.

Note that the input device 116 is input means including user operation, receiving communications, and inputting images from a camera and the like. The output device 117 is output means including presenting information to the user, sending communications, outputting images to a display or a printer, and the like. Further, the output destination can be connected to another system to provide another service associated with the embedding information to the user. The process of the module 107 for embedding a watermark and the process of the module 120 for detecting a watermark can run on the same computer or on different server computers separately.

The basic principles of the digital watermark embedding method and the digital watermark detection method will be described using Equations 1 and 2. Note that in the present embodiment, various digital watermark embedding and detection methods can be used. It is possible to use different methods such as a method for embedding watermarks in transformed region of image as well as a method for embedding watermarks by controlling quantization parameters in encoding image.

A set of pseudo random numbers with a length d is given in advance, which is shared by the embedding method and the detection method. The original image is divided into n blocks with the same length d. The watermark is embedded in the image in such a manner that the watermark is superimposed on a set of numbers $Y_i$ representing the ith block of the n blocks. At this time, a set of numbers $Y'_I$, which indicates the corresponding one block in the watermarked image, can be obtained by calculating Equation 1, where the watermark strength is $s_i$.

Equation 1

$$Y'_i = Y_i + M \cdot S_i$$

The watermark detection uses the estimation value ν obtained by calculating the correlation value between the set M of pseudo random numbers and the corresponding part of the watermarked image. The evaluation value ν can be obtained by calculating Equation 2.

Equation 2

$$\nu = M \cdot Y'$$

When the estimation value ν is close to 1, the watermarked image has high correlation relationship with M, meaning that a watermark is in the image. In other words, the presence of a watermark can be determined by comparing the estimation value ν with a predetermined positive threshold value. In one bit of embedding information, the determination is performed twice by using two sets of pseudo random numbers: M0 representing 0 and M1 representing 1. The determination may be performed once by using the point of the estimation value ν of M1, M2 apart from 0. Multiple bits of information can be embedded in the image by dividing the image into regions and by applying the same method to each region. Further, the watermark detection process can be more stable by embedding a large number of watermarks and by summing up the watermarks in the detection.

Note that in the following description, the watermark block is an example of a set M of pseudo random numbers with the length d. The watermark block M1 or M2, or both of them are superimposed on the original image in the region for embedding a watermark that is specified by a whole mask. However, no watermark is superimposed on the location of the specific region.

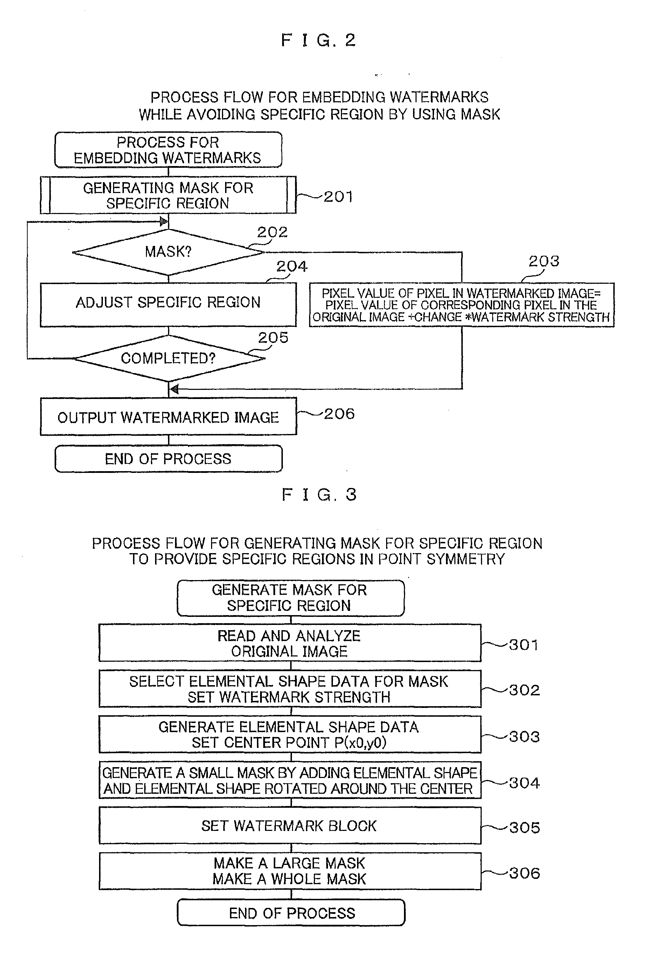

Fig. 2 is a flow chart of the process for embedding a watermark while avoiding the specific region by using a mask.

In step 201, the digital watermark embedding system performs the process of the module 108 for generating a mask for a specific region to provide a specific region in point symmetry.

In step 202, the system determines whether pixels of the original image are located in the region for embedding a watermark that is specified by the mask, or located in the specific region. In the following process, the system repeatedly performs control until the entire image is processed.

In step 203, if the location of the process target is in the region for embedding a watermark, the watermark is embedded. The embedding information is determined in advance. Alternately, the embedding information is automatically generated by a timer, random numbers and the like, or is input by using the input device. The embedding information is encoded and converted to a bit string (010111..., and so on) when it is used.

The watermark block corresponding to the bit value of the embedding information is prepared. Then, the value of the watermark block is superimposed on the corresponding position of the original image. The watermark is superimposed on the original image in such a way that the change in the value of the watermark block is multiplied by the watermark strength and the obtained value is added to the original image to generate a watermarked image. At this time, the watermark strength is given by analyzing the original image so that the watermarked image is not made to disturb the user's viewing of the image.

In step 204, if the location of the process target is in the specific region, the watermark is not embedded. In other words, because the watermark is not embedded in the specific region, the watermarked image is the same as the original image, so that the image quality can almost completely be maintained in the specific region. However, when the original image is originally similar to the watermark block, it causes noise in the watermark detection process based on correlation calculation, although watermark information is not embedded. In this case, a fine adjustment may be made to the specific region of the watermarked image.

The adjustment method will be described. The value of the correlation between the block in the specific region of the original image and the watermark block is calculated. The correlation value is compared with a predetermined threshold value. If the correlation value is greater than the threshold value, a fine adjustment is made to the output image. The method for reducing correlation can use various techniques. The correlation value is divided by the watermark block size, and the obtained value is defined as the adjustment strength. The element value of the watermark block is multiplied by -1 to generate an adjustment block indicating inverse correlation with the watermark block. The predetermined adjustment parameter, the adjustment block, and the adjustment strength are multiplied together and added to the original image to adjust the watermarked image. The adjustment strength is smaller than the watermark strength, so that the image quality in the adjusted specific region can be maintained better than in the region for embedding a watermark.

In step 205, the digital watermark embedding system checks whether the entire image has been processed, and repeatedly performs control. In step 206, the digital watermark embedding system outputs the watermarked image. Note that it is possible to check whether the watermark can be detected by performing image processing to the output image and then performing detection process to the processed image. When the watermark can be constantly detected by applying various geometric transformations such as rotation and scaling, the system outputs the watermarked image. If the watermark is not detected constantly, the system can return to the first step 201 to analyze the original image to try different parameters.

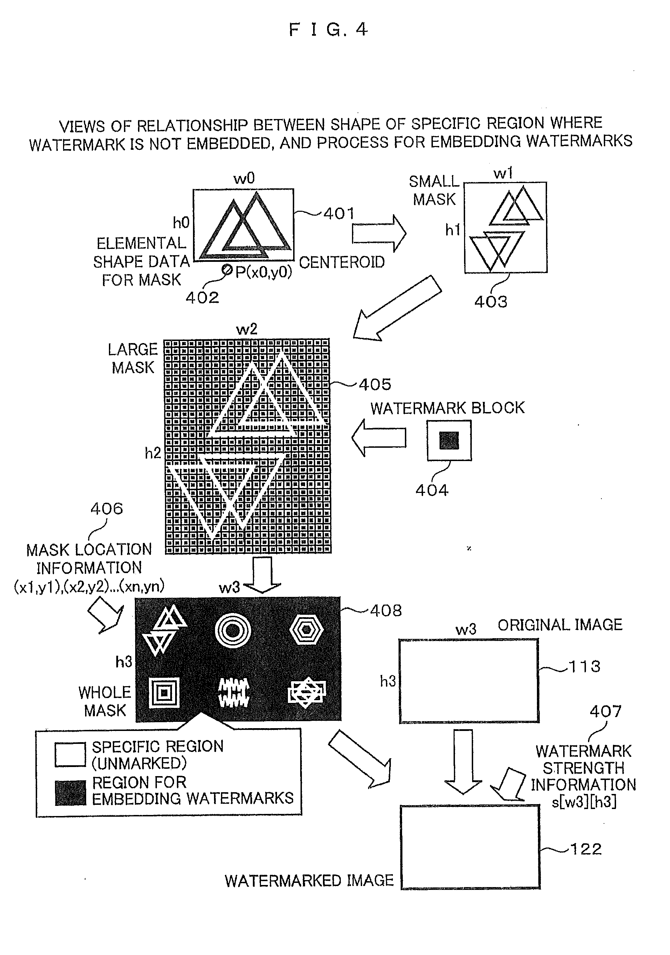

Fig. 3 shows the flow of the process of the module 108 for generating a mask for a specific region to provide a specific region in point symmetry. Fig. 4 shows the relationship between the shape of the specific region in which no watermark is embedded, and the process for embedding a watermark. The process for embedding a watermark will be described in detail with reference to Figs. 3 and 4.

In Step 301, the digital watermark embedding system reads the original image 113. Further, the system analyzes the image content, and selects a mask base shape 401 suitable for the characteristics of the pattern from a plurality of data pieces given in advance, or generates pattern characteristics information to transform and use the pattern characteristics. The mask base shape 401 can be any figure, and can be used in combination with figures with various effects. The mask base shape 401 can be changed in each content. It is also possible that a plurality of types of the mask base shape 401 are used and changed for each specific region in the content.

In step 302, the digital watermark embedding system examines the correlation between the data of a plurality of types of the mask base shape 401 stored in advance, and the original image 113. Then, the system selects the mask base shape with a high or low correlation. The mask with a high correlation is effective to maintain the image quality. Thus, the watermark robustness can be established by setting the watermark strength 407, and the like, used in step 203, to a value larger than the reference value. The mask with a low correlation is effective to maintain the watermark robustness. Thus, the image quality can be maintained by setting the watermark strength to a value smaller than the reference value. Note that the watermark strength 407 defines the watermark strength in the region for embedding a watermark close to the specific region.

For example, a circle shape has property with a rotation invariant amount. Because a rectangle shape is highly similar to the shape of the image content, the efficiency for embedding a watermark is high, allowing the watermark to be embedded in the image smaller than the conventional one. Moreover, a shape with a low spatial frequency such as a thick line has an effect of improving the watermark robustness against frequency filtering. Because of the characteristics of human eyes that see figures as a whole, a random shape is almost imperceptive to human eyes, which helps maintain the image quality of the watermarked image. The color can also be changed in addition to the shape.

In step 303, the digital watermark embedding system examines the characteristics of the original image 113, and generates the mask base shape 401 with similar characteristics. More specifically, the system first removes the transformed part with a high frequency after Fourier transformation of the luminance value of pixel. Next, the system selects the median from the luminance value of pixel after inverse Fourier transformation of the transformed part with a low frequency. Then, the system performs binarization with the median as the threshold value. It is also possible to generate the mask base shape 401 with dissimilar characteristics. Finally, the system compares the generated binary figure with the mask base shape 401 selected in step 302, to select one with higher correlation with the original image as the valid mask base shape 401. Further, if an artificial shape of triangle is drawn in a plain region with a low spatial frequency such as blue sky background of image, it would be easily perceptible to human eyes. In this case, heuristics such as a random number and a cloud shape can be used. By selectively using or generating the appropriate mask base shape, the image quality of the watermarked image 122 can be better maintained.

In step 303, the digital watermark embedding system also defines a centroid 402 of the mask base shape 401 as P (x0, y0). The system generates the centroid 402 around the mask shape by reading the predetermined parameter information from the disk or by using a random number, and the like.

In step 304, the digital watermark embedding system generates a small mask 403 by combining the shape obtained by rotating the mask base shape 402 about the centroid 402 by 180 degrees, with the original mask shape 402. In the small mask 403, two mask base shapes are arranged in point symmetry.

Note that the rotation angle can be any angle and the centroid 402 can be located in any position. Even if the mask base shapes are not formed in point symmetry, it is possible that the positional relationship has symmetric and regular characteristics such as line symmetry and rotational symmetry. The small mask 403 is the form of binary image, which is the base of control in determining that the position of 0 is the region for embedding a watermark and the position of 1 is the specific region. Another small mask can also be used for finer sorting in the form of multivalued image.

In step 305, the digital watermark embedding system generates a watermark block 404 by reading the predetermined information from the disk or by using a random number and the like. The watermark block may be any pattern with a given frequency element. The detection is more stable when the code and the value are adjusted to have the characteristics that the sum is zero as in the case of a set of pseudo numbers.

In step 306, the digital watermark embedding system generates a large mask 405 by placing the watermark block 404 in the region for embedding a watermark that is specified by the small mask 403. A predetermined control value is used for the specific region specified by the small mask 403. The large mask 405 shows the shape of one specific region as a process unit to detect the centroid in the following process for detecting a watermark.

In step 306, the digital watermark embedding system also generates a whole mask 408 by placing the large mask 405 based on mask location information 406. It is possible that the mask location information 406 has a regularity that can be calculated. The mask location information 406 can be obtained by various methods such as reading predetermined coordinate values from the disk, arranging at regular intervals, and using the output of trigonometric functions. If two large masks 405 are placed separately in the whole mask 408, an additional watermark may be embedded between them. In this case, another watermark pattern orthogonal to the watermark block 404 can be used.

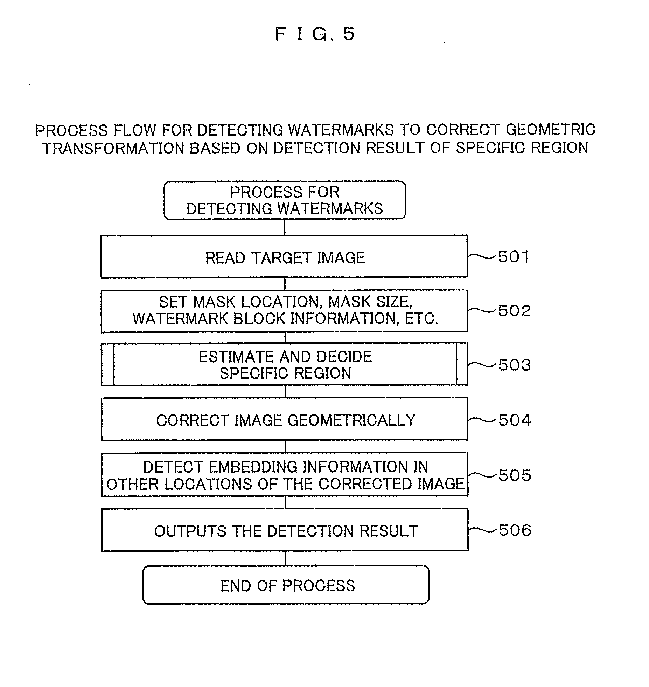

Fig. 5 is a flow chart of the watermark detection process to perform geometric translation correction based on the specific region detection result.

In step 501, the digital watermark detection system reads the target image 122.

In step 502, the digital watermark detection system shares all parameters such as the mask location information 406, the size of the large mask 405, and the watermark block information 404, with the process of the module 107 for embedding a watermark. Then, the digital watermark detection system sets the parameters on the memory. The method for sharing the parameters is such that the information output from the output device 105 by the overall control 109 is stored in the disk 114 in advance by the input device 116 in the overall control 119. It is possible to cut out a part of the target image 122 with a size in which a plurality of the large masks 405 are included, based on the mask location information 406 and the like. When the size of the target image is reduced, the following process is speeded up.

In step 503, the module 121 for estimating specific regions of the digital watermark detection system performs the process for estimating specific regions, and obtains the centroid of specific regions as well as scaling parameters. The process method will be described in detail below. The digital watermark detection system detects a plurality of specific regions to estimate the geometric transformation function generated in the centroid of the detected specific regions. If three specific regions are detected, a unique variable of the geometric transformation can be estimated by the X and Y coordinate values before and after transformation. Thus, the function of rotation, scaling, and translation applied to the image can be determined. If four specific regions are detected, it is possible to estimate the geometric transformation function of image distortion including projection transformation.

In step 504, the digital watermark detection system performs geometric transformation by performing inverse transformation of the estimated geometric transformation on the target image 122. If the estimation is correct, the target image is inversely transformed in such a way that the watermark is embedded in the region geometrically equivalent to the watermarked image 113.

In step 505, the digital watermark detection system detects the embedding information in the region for embedding a watermark, namely, in the region other than the specific region. The system sequentially scans the target image from the left end for each watermark block size to detect a watermark in the region for embedding a watermark. In this way, the system obtains codes of 010111 and so on. Then, the codes are decoded to reproduce the embedding information. It is possible to use the whole mask 408 or separately define the region for embedding a watermark in a predetermined positional relationship with a plurality of centroids.

In step 506, the digital watermark detection system outputs the detection result.

By detecting centroids in the process for estimating specific regions, the amount of calculation is reduced compared to that of the conventional method, leading to the effect of resource saving, power saving, and speeding up in the geometric transformation correction process 504. Resource saving helps facilitate the watermark process implementation by hardware with limited resources. Further, a plurality of sheets of images can be processed at a short time, by speeding up the process. Compared to the user operation that captures pictures several times due to failure to detect watermarks, it is possible to continuously detect watermarks by continuously inputting images as a video. Thus, the number of user operations is reduced and the usability of the digital watermark detection system is improved.

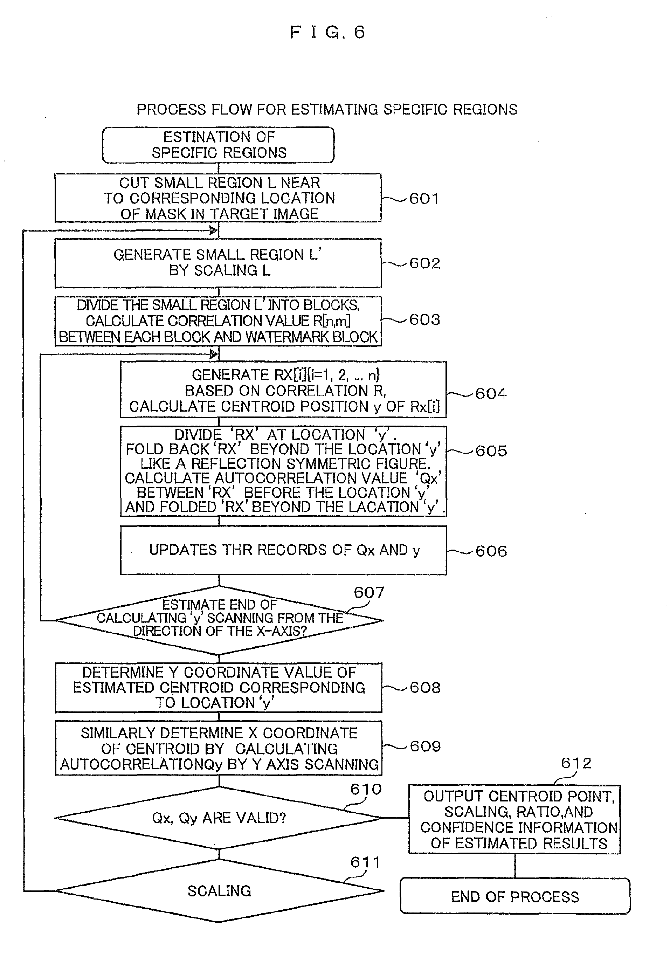

Fig. 6 is a flow chart of the process for estimating specific regions.

In step 601, the digital watermark detection system extracts a small region L estimated to include one or more specific regions, from the target image 122 in the vicinity of the mask location information 406. In the estimation, the size of the large mask 405 is multiplied by a predetermined constant on the basis of the mask location 406, and the obtained value is set as the size.

In step 602, the digital watermark detection system specifies the scaling ratio in the range of 80% to 120%, and the like, as a given parameter range. Further, the system generates a small region L' by scaling the small region L. It is also possible to perform projection transformation instead of scaling.

In step 603, the digital watermark detection system divides the small region L' into a plurality of blocks based on the size of the small block 404. Further, the system sequentially calculates values of the correlation between each block and the watermark block, to construct a two-dimensional correlation values $R[n, m]$. $R[n, m]$ is a set of estimation values indicating whether each block of the small region L' is a specific region. If a certain block is located in the specific region, the correlation value is zero or close to zero. If the block is located in the region for embedding a watermark, the correlation value is close to 1. In other words, a subset of values of $R[n, m]$ close to zero shows the shape of the specific region in which the watermark is not embedded. When the same watermark is repeatedly embedded in another region, the watermark detection is more stable by using the sum of a plurality of sets of $R[n, m]$.

Note that the signal of the watermark block 404 can have various shapes such as circle, vertical stripe, horizontal stripe, and random number shapes. Further, the transform domain and frequency band of the signal can be changed. When k types of signals (also referred to as patterns) of the watermark block are used, k types of two-dimensional functions are generated. In such a case, a single set of two-dimensional correlation values $R[n, m]$ can be calculated by averaging or adding the sum of the absolute values of the elements. Alternatively, it is possible to summarize the results obtained by repeating a series of processes k times.

In step 604, the digital watermark detection system scans $R[n, m]$ in the X axis direction, extracts one row of $R[n, m]$ on the scan line (x=x0) as a set of estimation values $Rx[i]$ {i=1, 2.. n}. Then, the system calculates the centroid position y of $Rx[i]$.

In step 605, the digital watermark detection system divides $Rx[i]$ at the location j of an integer close to the real number of the centroid position y, folding back

$Rx[i]$ beyond the location j like a reflection symmetric figure. In this way, the system calculates the autocorrelation $Qx$.

In step 606, if the estimation value $Qx$ at the feature centroid position j is greater than the estimation values from the first to the j-1th locations, the digital watermark detection system updates the records of $Qx$ and j. Then, the system obtains the location j in which $Qx$ is the maximum value at the time of the completion of the X-axis direction scan. If $Qx$ is greater than a predetermined threshold, the system can stop the process and define y=j. Note that this process is described in integer processing to simplify the description. However, complementary processing with real numbers can also be used.

In step 607, the digital watermark detection system repeatedly performs the X-axis direction scan m times by changing the position of the X-axis direction scanning. Note that the values of $R[m][n]$ show the distribution shape symmetric with respect to the centroid of the specific region.

Note that when the estimation values $Rx[i]$ are calculated by summing m sets of the estimation values $R[m][n]$ in the Y-axis direction, the centroid position of the estimation values $Rx[i]$ also shows the centroid. In this case, there is no need to perform the X-axis direction scan, so that the centroid calculation is performed only once. As a result, the calculation load is reduced and the watermark detection process is speeded up. Further, it is possible to emphasize the correlation due to summing the estimation values. Thus, even if smaller values of the watermark strength and adjustment strength are used, stable detection can be achieved. In other words, the image quality of the watermarked image can be better maintained. The effect of maintaining the image quality can also be obtained in the description of other configurations of the present embodiment.

In step 608, the digital watermark detection system calculates the Y-axis coordinate of the centroid in the target image. The Y-axis coordinate corresponding to the location y is determined by proportional division, based on the mask location information 406 as well as the geometric positional relationship such as the size of the small region L', the small region L, and the watermark block 404.

In step 609, similarly to the X-axis direction scan, the digital watermark detection system calculates the autocorrelation $Qy$ by the Y-axis direction scan to determine the X-axis coordinate of the centroid.

In step 610, if the estimation values $Qx$ and $Qy$ are greater than a predetermined threshold value, the digital watermark detection system performs a comparison process to determine validity.

In step 611, if the estimation values $Qx$ and $Qy$ are not valid, the digital watermark detection system repeats a rescaling process to generate again the small region L' by changing scaling parameters.

In step 612, if the estimation values $Qx$ and $Qy$ are valid, the digital watermark detection system outputs the determination results of the XY coordinates of the centroid as well as the scaling ratio. The determination results are the numerical values in the coordinate system of the target image.

Here, the possibility of rotation and scaling is described. When compared to a method for searching for the presence of a watermark in the entire image by actually rotating and scaling all pixels of the image, it is possible to reduce the search range by treating only small regions around the mask location. Further, also in the small region, it is possible to search for the presence of a watermark in a small data range in which pixels are aggregated into the estimation values Rx, without searching for a pixel value on the possibility of rotation. Further, the centroid position can also be calculated without search, by adding and averaging the estimation values Rx. Thus, the process for estimating specific regions can be performed with a small amount of calculation at a high speed.

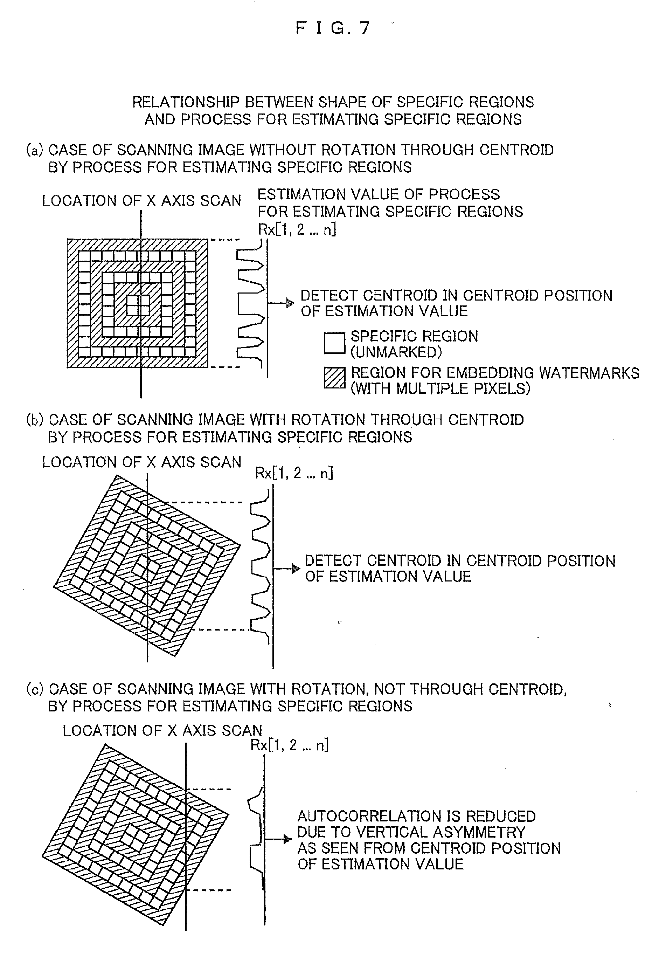

Figs. 7A, 7B, and 7C are views of the relationship between the shape of specific regions and the process for estimating specific regions. The process of the module 121 for estimating specific regions in watermark detection will be described in detail below with reference to Fig. 7A to 7C.

The watermarked image 123 includes a block located in the region 115 for embedding a watermark in which the watermark is embedded, and a block located in the specific region 114 in which the watermark is not embedded. The block located in the specific region has a correlation value of zero or close to zero, with the watermark block 404. The target image 122 is the watermarked image 123 subjected to image processing. Thus, also in the target image 122, the correlation value of the block located in the specific region with the watermark block 404 is a small value close to zero.

Fig. 7A shows the estimation values Rx[i] {i=1, 2, ... n} obtained by scanning the target image without geometric transformation such as rotation and scaling between the watermarked image 123 and the target image 122 (corresponding to the image immediately after embedding), through the centroid in the X-axis direction by the process of the module 121 for estimating specific regions. In this case, the estimation values Rx[i] {i=1, 2.. n} indicates the correlation between the target image and the watermarked block 404 on the scan line. Rx[i] can be obtained by the calculation in step 604.

In Fig. 7A, the evaluation values are vertically proportional as seen from the centroid position of the estimation values. This can be determined by the autocorrelation of reflection symmetry with respect to the element j close to the centroid position. In other words, in step 605, this can be determined by checking how close to the correlation between $R \times 1 = \{Rx[j], R \times [j-1]. R \times [j-2]...\}$ and $Rx2 = \{R \times [j+1]. R \times [j+2]...\}$ is 1. If the autocorrelation is found, the centroid position j is determined to be the location corresponding to the Y coordinate of the centroid.

Fig. 7A shows the positional relationship of point symmetry with respect to the location corresponding to the Y coordinate of the centroid, in which the centroid position j is the same regardless of the location of the X-axis scan line. Thus, faster processing can be achieved by stopping the process according to the comparison of the predetermined threshold value with the correlation value before scanning the entire image in the X-axis direction.

This is the same for the Y-axis scanning.

Fig. 7B shows the estimation values Rx[i] obtained by scanning the target image with geometric transformation such as rotation and scaling between the watermarked image and the target image, through the centroid by the process for estimating specific regions. Similarly to the case in Fig. 7A, the evaluation values are vertically proportional as seen from the centroid position of the estimation values. As the process method of steps 605 and 606, the location corresponding to the Y coordinate can be obtained by the same determination method with the centroid position as the centroid.

Fig. 7C shows the estimation values Rx[i] obtained by scanning the target image with geometric transformation such as rotation and scaling between the watermarked image and the target image, not through the centroid, by the process for estimating specific regions. In this case, unlike the case in Fig. 7B, the estimation values are vertically asymmetric as seen from the centroid position of the estimation values. This results in the reduction in the autocorrelation of the estimation values Rx[i]. As shown in Fig. 7B, the estimation value A of the autocorrelation is maximum when the X-axis scan line is located on the centroid. As shown in Fig. 7C, the estimation value B of the autocorrelation is smaller than the estimation value A with different positional relationship. In this case, the centroid position indicates the centroid but is output with a low estimation value of certainty output in step 612.

Note that if the shape of the specific region is a vertically long rectangle, the information can be efficiently stored in the image. In addition, it is possible to detect a watermark with high sensitivity when the geometric transformation is in the vertical direction. For example, when a person takes a picture of a double-page spread of a printed book with a watermark with a portable device such as smartphone at a natural angle, the taken image has a shape of projection transformation as a whole, causing complex distortion including roundness in the double-page spread. In the present embodiment, it is possible to select a free shape for the specific region, allowing embedding and detection of a watermark in a small size image in a portion of the print. Thus, there is the effect of approximating the central part of the taken image as a geometrically transformed image that is compressed in the vertical direction. In other words, it is possible to detect a watermark by a simple calculation at a high speed.

## Claims

1. A digital watermark embedding method in a computer including a disk (102), a memory (103), and an input/output device (104, 105), to generate a watermarked image (113),
wherein the digital watermark embedding method comprising:

   inputting an image (111); and
   providing one or more specific regions (114) in the image (111), each specific region (114) including two or more base regions that are point symmetric with respect to the centroid (402), and embedding a watermark in the image (111) while avoiding the specific region (114).

2. A digital watermark detection method in a computer including a disk (114), a memory (115), and an input/output device (116, 117),
wherein the digital watermark detection method comprises:

   inputting an image (122);
   detecting the shape of a specific region (114) in which no watermark is embedded;
   calculating the centroid position of the specific region (114) as a centroid;
   correcting geometric transformation of the image (122) based on the location in the image (122) that corresponds to one or more calculated centroids; and
   detecting a watermark in the region other than the specific region (114).

3. The digital watermark embedding method according to claim 1, comprising:

   referring to watermark parameters defined and stored in the memory (103) in advance, the parameters including one or more watermark blocks (404) indicating embedding information (112), one or more centroid coordinates (402), one or more base shapes (401), and mask location information (406);
   dividing the original image (111) into blocks by the size of the watermark block (404), calculating the correlation between the block (404) and the base shape (401), and selecting one base shape (401) based on the correlation;
   copying the selected base shape (401) into a mask (403) indicating the specific region (114), copying the base shape (401) into the location point symmetric to the centroid (402), and generating one or more masks (405) including the two base shapes (401);
   generating a watermarked image (113) by embedding the watermark block (404) in the original image (111) while avoiding the specific region (114) by using the mask location information (406) and the mask (405);
   calculating the adjustment strength based on the correlation in the location of the specific region (114) of the watermarked image (113);
   calculating an inverted element value by inverting the sign of an element value of the watermark block (404); and
   reflecting an additional value based on the inverted element value and the adjustment strength, in the watermarked image (113).

4. The digital watermark detection method according to claim 2, comprising:

   referring to watermark parameters defined and stored in the memory (115) in advance, the parameters including one or more watermark blocks (404) indicating embedding information (112), and mask location information (406);
   dividing the target image (122) into a plurality of blocks by the size of the watermark block (404), and calculating correlation values between each of the blocks and the watermark block (404);
   calculating the centroid position (402) in the correlation values, to check that the distribution of the correlation values is symmetric with respect to the centroid position (402), by calculating the autocorrelation;
   calculating the coordinate of the centroid in the target image (122) that corresponds to the centroid position (402);
   estimating the geometric transformation process applied to the watermarked image (122) by using one or more sets of centroid coordinates (402) as well as mask location information (406); and
   applying inverse transformation of the geometry transformation to the target image (122).

5. The digital watermark embedding method according to claim 1 or 3,
wherein the shape of the specific region (114) in which no watermark is embedded is circular or rectangular.

6. The digital watermark detection method according to claim 2 or 4,
wherein the shape of the specific region (114) in which no watermark is embedded is circular or rectangular.

7. The digital watermark embedding method according to any one of claims 1, 3 and 5, comprising:

   forming the specific region (114) in which no watermark is embedded to have a shape similar to the pattern of the original image (111); and increasing the watermark strength in the region for embedding a watermark (115) around the specific region (114).

F I G. 1

DIGITAL WATERMARK EMBEDDING AND DETECTION SYSTEM

DIGITAL WATERMARK EMBEDDING SYSTEM          103

112  EMBEDDING IMFORMATION

MEMORY 107          108          109          110

| MODULE FOR EMBEDDING WATERMARK | MODULE FOR GENERATING MASK FOR SPECIFIC REGION | MODULE FOR OVERALL CONTROL | MODULE FOR USING IMAGE |

111  ORIGINAL IMAGE

| CPU | DISK | INPUT DECIVE | OUTPUT DECIVE |

~106

101          102          104          105          113          111

114  ☐ SPECIFIC REGION (NO MARK)

115  ▨ REGION FOR EMBEDDING WATERMARKS

123

WATERMARKED IMAGE → SERVICE SYSTEM

112

CAPTURING IMAGE OF VIEWING DISPLAY DEVICE OR VIEWING MEDIA

DIGITAL WATERMARK DETECTION SYSTEM          115

MEMORY 120

| OVERALL CONTROL | ~119 |

LOCATION CAN BE IDENTIFIED BY CALCULATING CENTROID OF SPECIFIC REGION

| MODULE FOR DETECTING WATERMARK | MODULE FOR ESTIMATING SPECIFIC REGIONS |

~121

122

TARGET IMAGE

| CPU | DISK | INPUT DECIVE | OUTPUT DECIVE |

(DETECTED RESULTS)

~118

113          114          116          117

# F I G. 2

PROCESS FLOW FOR EMBEDDING WATERMARKS
WHILE AVOIDING SPECIFIC REGION BY USING MASK

```
        PROCESS FOR
   EMBEDDING WATERMARKS

     GENERATING MASK FOR            ~201
      SPECIFIC REGION

                        202
          < MASK? >
                        204
     ADJUST SPECIFIC REGION      PIXEL VALUE OF PIXEL IN WATERMARKED IMAGE=
                                 PIXEL VALUE OF CORRESPONDING PIXEL IN THE     203
                                 ORIGINAL IMAGE +CHANGE *WATERMARK STRENGTH
                        205
         < COMPLETED? >

     OUTPUT WATERMARKED IMAGE      ~206

          END OF PROCESS
```

# F I G. 3

PROCESS FLOW FOR GENERATING MASK FOR SPECIFIC REGION
TO PROVIDE SPECIFIC REGIONS IN POINT SYMMETRY

```
        GENERATE MASK FOR
         SPECIFIC REGION

         READ AND ANALYZE               ~301
          ORIGINAL IMAGE

    SELECT ELEMENTAL SHAPE DATA FOR MASK   ~302
        SET WATERMARK STRENGTH

      GENERATE ELEMENTAL SHAPE DATA        ~303
        SET CENTER POINT P(x0,y0)

  GENERATE A SMALL MASK BY ADDING ELEMENTAL SHAPE   ~304
  AND ELEMENTAL SHAPE ROTATED AROUND THE CENTER

        SET WATERMARK BLOCK               ~305

         MAKE A LARGE MASK                ~306
         MAKE A WHOLE MASK

          END OF PROCESS
```

# F I G. 4

VIEWS OF RELATIONSHIP BETWEEN SHAPE OF SPECIFIC REGION WHERE
WATERMARK IS NOT EMBEDDED, AND PROCESS FOR EMBEDDING WATERMARKS

F I G. 5

PROCESS FLOW FOR DETECTING WATERMARKS TO CORRECT GEOMETRIC
TRANSFORMATION BASED ON DETECTION RESULT OF SPECIFIC REGION

PROCESS FOR
DETECTING WATERMARKS

READ TARGET IMAGE — 501

SET MASK LOCATION, MASK SIZE,
WATERMARK BLOCK INFORMATION, ETC. — 502

ESTIMATE AND DECIDE
SPECIFIC REGION — 503

CORRECT IMAGE GEOMETRICALLY — 504

DETECT EMBEDDING INFORMATION IN
OTHER LOCATIONS OF THE CORRECTED IMAGE — 505

OUTPUTS THE DETECTION RESULT — 506

END OF PROCESS

F I G. 6

PROCESS FLOW FOR ESTIMATING SPECIFIC REGIONS

```
                ┌─────────────────────────┐
                │   ESTINATION OF         │
                │   SPECIFIC REGIONS      │
                └─────────────────────────┘
                            │
        ┌───────────────────────────────────────┐
        │   CUT SMALL REGION L NEAR             │
        │   TO CORRESPONDING LOCATION           │ ~601
        │   OF MASK IN TARGET IMAGE             │
        └───────────────────────────────────────┘
                            │
        ┌───────────────────────────────────────┐
        │   GENERATE SMALL REGION L'            │ ~602
        │   BY SCALING L                        │
        └───────────────────────────────────────┘
                            │
        ┌───────────────────────────────────────┐
        │  DIVIDE THE SMALL REGION L' INTO BLOCKS. │
        │  CALCULATE CORRELATION VALUE R[n,m]   │ ~603
        │  BETWEEN EACH BLOCK AND WATERMARK BLOCK │
        └───────────────────────────────────────┘
                            │
        ┌───────────────────────────────────────┐
        │   GENERATE RX[i][i=1, 2, ... n]       │
        │   BASED ON CORRELATION R,             │ ~604
        │   CALCULATE CENTROID POSITION y OF Rx[i] │
        └───────────────────────────────────────┘
                            │
        ┌───────────────────────────────────────┐
        │   DIVIDE 'RX' AT LOCATION 'y'.        │
        │  FOLD BACK 'RX' BEYOND THE LOCATION 'y' │
        │  LIKE A REFLECTION SYMMETRIC FIGURE.  │ ~605
        │  CALCULATE AUTOCORRELATION VALUE 'Qx' │
        │  BETWEEN 'RX' BEFORE THE LOCATION 'y' │
        │  AND FOLDED 'RX' BEYOND THE LACATION 'y'. │
        └───────────────────────────────────────┘
                            │
        ┌───────────────────────────────────────┐
        │   UPDATES THR RECORDS OF Qx AND y     │ ~606
        └───────────────────────────────────────┘
                            │
                          607
              ◇─────────────────────────◇
              │  ESTIMATE END OF        │
              │ CALCULATING 'y' SCANNING FROM THE │
              │  DIRECTION OF THE X-AXIS? │
              ◇─────────────────────────◇
                            │
        ┌───────────────────────────────────────┐
        │   DETERMINE Y COORDINATE VALUE OF     │
        │   ESTIMATED CENTROID CORRESPONDING    │ ~608
        │   TO LOCATION 'y'                     │
        └───────────────────────────────────────┘
                            │
        ┌───────────────────────────────────────┐
        │   SIMILARLY DETERMINE X COORDINATE    │
        │   OF CENTROID BY  CALCULATING         │ ~609
        │  AUTOCORRELATIONQy BY Y AXIS SCANNING │
        └───────────────────────────────────────┘
                            │
                          610
              ◇─────────────────────────◇
              │     Qx, Qy ARE VALID?   │
              ◇─────────────────────────◇
                            │
                          611
              ◇─────────────────────────◇
              │        SCALING          │
              ◇─────────────────────────◇
```

                                        612
                        ┌───────────────────────────────┐
                        │  OUTPUT CENTROID POINT,       │
                        │  SCALING, RATIO,AND           │
                        │  CONFIDENCE INFORMATION       │
                        │  OF ESTIMATED RESULTS         │
                        └───────────────────────────────┘
                                        │
                        ┌───────────────────────────────┐
                        │       END OF PROCESS          │
                        └───────────────────────────────┘

16

# F I G. 7

**RELATIONSHIP BETWEEN SHAPE OF SPECIFIC REGIONS
AND PROCESS FOR ESTIMATING SPECIFIC REGIONS**

(a) CASE OF SCANNING IMAGE WITHOUT ROTATION THROUGH CENTROID
BY PROCESS FOR ESTIMATING SPECIFIC REGIONS

LOCATION OF X AXIS SCAN

ESTIMATION VALUE OF PROCESS
FOR ESTIMATING SPECIFIC REGIONS
$Rx[1, 2 \dots n]$

→ DETECT CENTROID IN CENTROID POSITION
OF ESTIMATION VALUE

☐ SPECIFIC REGION
(UNMARKED)

▨ REGION FOR EMBEDDING WATERMARKS
(WITH MULTIPLE PIXELS)

(b) CASE OF SCANNING IMAGE WITH ROTATION THROUGH CENTROID
BY PROCESS FOR ESTIMATING SPECIFIC REGIONS

LOCATION OF X AXIS SCAN

$Rx[1, 2 \dots n]$

→ DETECT CENTROID IN CENTROID POSITION
OF ESTIMATION VALUE

(c) CASE OF SCANNING IMAGE WITH ROTATION, NOT THROUGH CENTROID,
BY PROCESS FOR ESTIMATING SPECIFIC REGIONS

LOCATION OF X AXIS SCAN

$Rx[1, 2 \dots n]$

→ AUTOCORRELATION IS REDUCED
DUE TO VERTICAL ASYMMETRY
AS SEEN FROM CENTROID POSITION
OF ESTIMATION VALUE

**EP 2 770 476 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3902863 B

- JP 3949679 B